# EUROPEAN PATENT APPLICATION

(11) **EP 2 802 174 A1**
(43) Date of publication of application: **12.11.2014**
(21) Application number: 13755902.7
(22) Date of filing: 26.02.2013
(51) Int. Cl.: H04W 48/02

(54) **METHOD FOR CONTROLLING WIRELESS NETWORK CONNECTION AND HOTSPOT DEVICE**

(30) Priority: 29.02.2012 CN 201210049955
(71) Applicant: Huawei Device Co., Ltd., Shenzhen, Guangdong 518129 (CN)
(72) Inventor: QIN, Wei, Shenzhen Guangdong 518129 (CN)
(74) Representative: Maiwald Patentanwalts GmbH
(86) International application number: PCT/CN2013/071899
(87) International publication number: WO 2013/127325

(57) **Abstract**

Embodiments of the present invention disclose a method for controlling a wireless network connection and a hotspot device, where the method includes: establishing, by a hotspot device, an auxiliary wireless connection to an access device; measuring, by the hotspot device, a signal strength of the auxiliary wireless connection; and when the signal strength is greater than a preset strength threshold, enabling, by the hotspot device, the wireless network connection. The hotspot device includes: an auxiliary wireless connection establishing unit, configured to establish an auxiliary wireless connection to an access device; a signal strength obtaining unit, configured to measure a signal strength of the auxiliary wireless connection; and a wireless network connection enabling unit, configured to enable, when the signal strength is greater than a preset strength threshold, a wireless network connection. The auxiliary wireless connection is a connection that is established by adopting a wireless connection technology with power consumption being lower than that of the wireless network connection. Through a technical solution provided in the embodiments of the present invention, the enabling of the established wireless network connection may be implemented in place of manual work, improving intelligence performance of the hotspot device.

## Description

### CROSS-REFERENCE TO RELATED APPLICATION

This application claims priority to Chinese Patent Application No. 201210049955.7, filed with the Chinese Patent Office on February 29, 2012 and entitled "METHOD FOR CONTROLLING WIRELESS NETWORK CONNECTION AND HOTSPOT DEVICE", which is incorporated herein by reference in its entirety.

### TECHNICAL FIELD

The present invention relates to the field of communications technologies, and in particular, to a method for controlling a wireless network connection and a hotspot device.

### BACKGROUND

A hotspot device is a network access device that allows people to conveniently access a mobile network through a WIFI channel provided by the hotspot device under the condition that there is neither a fixed network nor WIFI access, and then implement access to the Internet. Common hotspot devices include a mobile phone, a WAN card with a WIFI function, and so on. The hotspot device has a function of switching on/off wireless access. Currently, in a solution of the function of switching on/off wireless access, a switch is mainly controlled manually. For example, a physical key for controlling enabling and disabling of a wireless access function is arranged on the hotspot device; or a user connects the hotspot device to a computer through a physical data line (or a wireless connection), and manually controls the enabling and disabling of the wireless access function through the computer. In the prior art, the enabling and disabling of the wireless access function must be manually operated by the user, and a function of intelligently controlling the enabling and disabling of the wireless access function cannot be provided, so that superior experience cannot be provided to the user. Also, after the user enables the wireless access function (for example, mobile network access or the WIFI function), if the user does not disable it in time, precious battery power may be wasted.

### SUMMARY

Embodiments of the present invention provide a method for controlling a wireless network connection and a hotspot device, so that the hotspot device can intelligently enable or disable the wireless network connection, improving intelligence performance of the device, and improving user experience and standby time of the hotspot device.

An embodiment of the present invention provides a method for controlling a wireless network connection, including:
establishing, by a hotspot device, an auxiliary wireless connection to an access device; measuring, by the hotspot device, a signal strength of the auxiliary wireless connection; and enabling, by the hotspot device, the wireless network connection when the signal strength is greater than a preset strength threshold, where, the auxiliary wireless connection is a connection that is established by adopting a wireless connection technology with power consumption being lower than that of the wireless network connection.

An embodiment of the present invention further provides a hotspot device, including: an auxiliary wireless connection establishing unit, configured to establish an auxiliary wireless connection to an access device; a signal strength obtaining unit, configured to measure a signal strength of the auxiliary wireless connection; a wireless network connection enabling unit, configured to enable a wireless network connection when the signal strength is greater than a preset strength threshold, where, the auxiliary wireless connection is a connection that is established by adopting a wireless connection technology with power consumption being lower than that of the wireless network connection.

It may be seen from the foregoing technical solution that, in the technical solution, an auxiliary wireless connection is established between a hotspot device and an access device; through a signal strength of transmission of the auxiliary wireless connection, a distance between the hotspot device and the access device is determined, and according to a measurement result, a wireless network connection of the hotspot device is enabled, that is, by monitoring the strength of the auxiliary wireless connection, control for enabling of the wireless network connection is implemented, thereby enabling the established wireless network connection in place of manual work, and improving intelligence performance of the hotspot device.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for controlling a wireless network connection according to Embodiment 1 of the present invention;
FIG. 2 is a schematic flowchart of another method for controlling a wireless network connection according to Embodiment 1 of the present invention;
FIG. 3 is a schematic diagram of a hotspot device according to Embodiment 2 of the present invention; and
FIG. 4 is a schematic diagram of another hotspot device according to Embodiment 2 of the present invention.

### DESCRIPTION OF EMBODIMENTS

### Embodiment 1

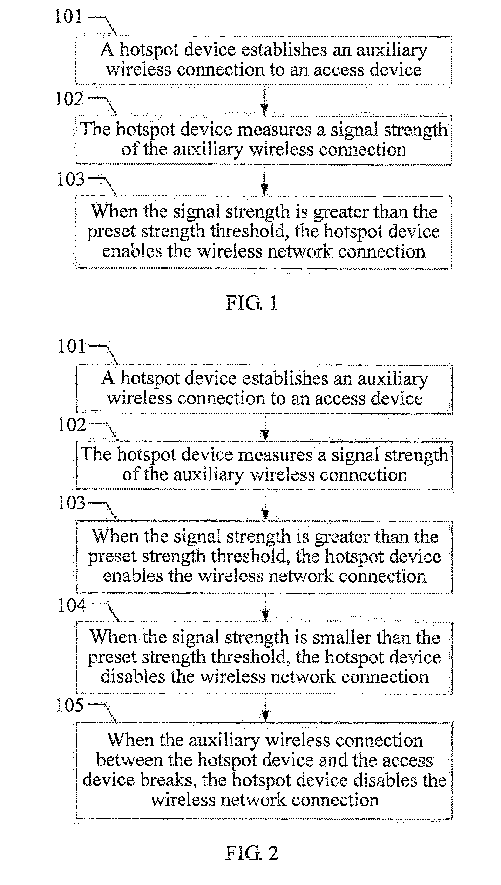

Embodiment 1 of the present invention provides a method for controlling a wireless network connection. As shown in FIG. 1, the method includes the following steps.

Step 101: A hotspot device establishes an auxiliary wireless connection to an access device.

The auxiliary wireless connection is a wireless connection with low power consumption, and may specifically be established through a Bluetooth (Bluetooth) technology, or established through a Zigbee technology. The present invention is not limited to the Bluetooth technology and the Zigbee technology, and the auxiliary wireless connection may also be established through another wireless transmission technology with low power consumption.

Step 102: The hotspot device measures a signal strength of the auxiliary wireless connection.

In step 102, the measuring the signal strength by the hotspot device may specifically be indicated through receive signal strength indication (RSSI, Receive Signal Strength Indication) of the hotspot device in the auxiliary wireless connection. At the same time, it needs to be understood that, strengths of transmit signals designed by different access devices themselves may be different. The strengths of signals transmitted by some access devices themselves are high, and the strengths of signals transmitted by some access devices themselves may be low; therefore, received signal strengths measured in a case where a distance is the same from the hotspot device to different access devices in a same environment may be different too. Therefore, a designer needs to consider the foregoing factors, and designs a reasonable signal strength threshold, which is preset to be a determining basis of subsequent step 103.

Step 103: When the signal strength is greater than the preset strength threshold, the hotspot device enables the wireless network connection, where the auxiliary wireless connection is a connection that is established by adopting a wireless connection technology with power consumption being lower than that of the wireless network connection.

The wireless network connection is a wireless connection with high power consumption, and may specifically be a connection established through at least one of a mobile network access technology and a WIFI access technology. The mobile network access technology may include various mobile network access technologies such as a Third Generation Mobile Communication (3G, 3rd-Generation) technology, a Long Term Evolution (LTE, Long Term Evolution) technology, a Fourth Generation Mobile Communication (4G, 4th-Generation) technology, a Wideband Code Division Multiple Access (WCDMA, Wideband Code Division Multiple Access) technology, a Time Division-Synchronous Code Division Multiple Access (TD-SCDMA, Time Division-Synchronous Code Division Multiple Access) technology, a Code Division Multiple Access (CDMA, Code Division Multiple Access) technology, and a Worldwide Interoperability for ,Microwave Access (WiMax, Worldwide Interoperability for Microwave Access) technology.

Optionally, before the hotspot device enables the wireless network connection, it may be first determined whether the hotspot device currently already enables the wireless network connection. When the hotspot device currently does not enable the wireless network connection, the wireless network connection of the hotspot device is enabled, which is not limited by the embodiment of the present invention.

Through description about the method for controlling a wireless network connection provided in Embodiment 1 of the present invention, in the method, an auxiliary wireless connection is established between a hotspot device and an access device; through the signal strength of transmission of the auxiliary wireless connection, a distance between the hotspot device and the access device is determined, and according to a measurement result, a wireless network connection of the hotspot device is enabled, that is, by monitoring the strength of the auxiliary wireless connection, control for enabling of the wireless network connection is implemented, thereby enabling the established wireless network connection in place of manual work, and improving intelligence performance of the hotspot device. Optionally, as shown in FIG. 2, the method may further include following step 104 and/or step 105.

Step 104: When the signal strength is smaller than the preset strength threshold, the hotspot device disables the wireless network connection.

Step 105: When the auxiliary wireless connection between the hotspot device and the access device breaks, the hotspot device disables the wireless network connection.

Through optional step 104 and/or step 105 provided in Embodiment 1 of the present invention, it may further be implemented that, when a preset condition is met, the wireless network connection of the hotspot device is automatically disabled, to effectively prevent waste of power consumption caused by forgetting to disable the wireless network connection; and because the power consumption of the auxiliary wireless connection is lower than that of the wireless network connection, using this method may also effectively improve standby time of the hotspot device.

### Embodiment 2

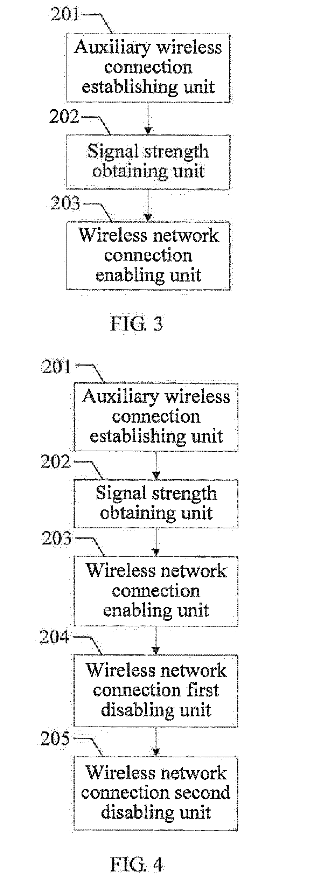

Embodiment 2 of the present invention provides a hotspot device. As shown in FIG. 3, the hotspot device includes an auxiliary wireless connection establishing unit 201, a signal strength obtaining unit 202, and a wireless network connection enabling unit 203.

The auxiliary wireless connection establishing unit 201 is configured to establish an auxiliary wireless connection to an access device; the auxiliary wireless connection is a wireless connection with low power consumption, and may specifically be established through a Bluetooth (Bluetooth) technology, or is established through a Zigbee technology. The present invention is not limited to the Bluetooth technology and the Zigbee technology, and the auxiliary wireless connection may also be established through another wireless transmission technology with low power consumption.

The signal strength obtaining unit 202 is configured to measure a signal strength of the auxiliary wireless connection; the measuring the signal strength by the hotspot device may specifically be indicated through receive signal strength indication (RSSI, Receive Signal Strength Indication) of the hotspot device in the auxiliary wireless connection.

The wireless network connection enabling unit 203 is configured to enable a wireless network connection when the signal strength is greater than a preset strength threshold, where, the auxiliary wireless connection is a connection that is established by adopting a wireless connection technology with power consumption being lower than that of the wireless network connection. The wireless network connection is a wireless connection with high power consumption, and may specifically be a connection established through at least one of a mobile network access technology and a WIFI access technology. The mobile network access technology may include various mobile network access technologies such as a third generation mobile communication (3G, 3rd-Generation) technology, a long term evolution (LTE, Long Term Evolution) technology, a fourth generation mobile communication (4G, 4th-Generation) technology, a technology wideband code division multiple access (WCDMA, Wideband Code Division Multiple Access) technology, a time division-synchronous code division multiple access (TD-SCDMA, Time Division-Synchronous Code Division Multiple Access) technology, a code division multiple access (CDMA, Code Division Multiple Access) technology, and a worldwide interoperability for microwave access (WiMax, Worldwide Interoperability for Microwave Access) technology.

Optionally, before the hotspot device enables the wireless network connection, it may be first determined whether the hotspot device currently already enables the wireless network connection. When the hotspot device currently does not enable the wireless network connection, the wireless network connection of the hotspot device is enabled, which is not limited by the embodiment of the present invention.

Through the hotspot device provided in Embodiment 2 of the present invention, an auxiliary wireless connection may be established between a hotspot device and an access device; through the signal strength of transmission of the auxiliary wireless connection, a distance between the hotspot device and the access device is determined, and according to a measurement result, a wireless network connection of the hotspot device is enabled, that is, by monitoring the strength of the auxiliary wireless connection, control for enabling of the wireless network connection is implemented, thereby enabling the established wireless network connection in place of manual work, and improving intelligence performance of the hotspot device.

Optionally, Embodiment 2 of the present invention may further include following optional units: a wireless network connection first disabling unit 204 or a wireless network connection second disabling unit 205.

The wireless network connection first disabling unit 204 is configured to disable the wireless network connection of the hotspot device when the signal strength in the hotspot device is smaller than the preset strength threshold.

The wireless network connection second disabling unit 205 is configured to disable the wireless network connection when the auxiliary wireless connection between the hotspot device and the access device breaks.

Through the hotspot device provided in an optional solution of Embodiment 2 of the present invention, it may further be implemented that, when a preset condition is met, the wireless network connection of the hotspot device is automatically disabled, to effectively prevent waste of power consumption caused by forgetting to disable the wireless network connection; and because the power consumption of the auxiliary wireless connection is lower than that of the wireless network connection, using this method may also effectively improve standby time of the hotspot device.

The foregoing embodiments are merely intended for describing the technical solutions of the present invention other than limiting the present invention. Although the present invention is described in detail with reference to the foregoing embodiments, a person of ordinary skill in the art should understand that he may still make modifications to the technical solutions described in the foregoing embodiments, or make equivalent replacements to some technical features thereof, without departing from the spirit and scope of the embodiments of the present invention.

It needs to be noted that, a person of ordinary skill in the art may understand that, all or some steps for implementing the foregoing method embodiments may be completed through hardware, and may also be completed by using a program to instruct relevant hardware. The program may be stored in a computer readable storage medium, where the storage medium may be a read-only memory, a flash memory, a magnetic disk, an optical disc, or a hard disk, and so on. When the program is executed, following steps are included.

A hotspot device establishes an auxiliary wireless connection to an access device; the hotspot device measures a signal strength of the auxiliary wireless connection; and the hotspot device enables the wireless network connection when the signal strength is greater than a preset strength threshold, where, the auxiliary wireless connection is a connection that is established by adopting a wireless connection technology with power consumption being lower than that of the wireless network connection.

## Claims

1. A method for controlling a wireless network connection, comprising:
establishing, by a hotspot device, an auxiliary wireless connection to an access device;
measuring, by the hotspot device, a signal strength of the auxiliary wireless connection; and
enabling, by the hotspot device, the wireless network connection when the signal strength is greater than a preset strength threshold,
wherein, the auxiliary wireless connection is a connection that is established by adopting a wireless connection technology with power consumption being lower than that of the wireless network connection.

2. The method according to claim 1, wherein, the auxiliary wireless connection comprises a connection established through any one of a Bluetooth technology and a Zigbee technology.

3. The method according to claim 1 or 2, wherein, the wireless network connection comprises a connection established through at least one of a mobile network access technology and a WIFI access technology.

4. The method according to any one of claims 1 to 3, wherein, after the measuring, by the hotspot device, a signal strength of the auxiliary wireless connection, the method further comprises:
disabling, by the hotspot device, the wireless network connection when the signal strength is smaller than the preset strength threshold.

5. The method according to any one of claims 1 to 4, wherein, after the establishing the wireless network connection between the hotspot device and the access device, the method further comprises:
disabling, by the hotspot device, the wireless network connection when the auxiliary wireless connection between the hotspot device and the access device breaks.

6. A hotspot device, comprising:
an auxiliary wireless connection establishing unit, configured to establish an auxiliary wireless connection to an access device;
a signal strength obtaining unit, configured to measure a signal strength of the auxiliary wireless connection; and
a wireless network connection enabling unit, configured to enable a wireless network connection when the signal strength is greater than a preset strength threshold,
wherein, the auxiliary wireless connection is a connection that is established by adopting a wireless connection technology with power consumption being lower than that of the wireless network connection.

7. The hotspot device according to claim 6, wherein, the auxiliary wireless connection establishing unit is configured to establish the auxiliary wireless connection through any one of a Bluetooth technology and a Zigbee technology.

8. The hotspot device according to claim 6 or 7, wherein, the wireless network connection enabling unit is configured to enable the wireless network connection established through at least one of a mobile network access technology and a WIFI access technology.

9. The hotspot device according to any one of claims 6 to 8, wherein the apparatus further comprising:
a wireless network connection first disabling unit, configured to disable the wireless network connection of the hotspot device when the signal strength in the hotspot device is smaller than the preset strength threshold.

10. The hotspot device according to any one of claims 6 to 9, further comprising:
a wireless network connection second disabling unit, configured to disable the wireless network connection when the auxiliary wireless connection between the hotspot device and the access device breaks.
